# EUROPEAN PATENT APPLICATION

(11) **EP 2 711 805 A1**
(43) Date of publication of application: **26.03.2014**
(21) Application number: 12185889.8
(22) Date of filing: 25.09.2012
(51) Int. Cl.: G06F 3/01, G06F 3/0488, G06K 9/00

(54) **Method for handling a gesture-based user interface**

(71) Applicant: Advanced Digital Broadcast S.A., 1292 Chambesy (CH)
(72) Inventor: Wielgosz, Marcin, 65-119 Zielona Gora (PL)
(74) Representative: Pawlowski, Adam

(57) **Abstract**

A method for handling a gesture-based user interface for a device with a screen, comprising the steps of: receiving (301) an input via a gesture-based input interface, determining (302) a set of current context gestures that are acceptable in a current context of operation of the device and descriptors of the gestures, each gesture comprising at least two segments corresponding to the type of inputs that can be received via the gesture-based input interface (101), determining (303) the segment type corresponding to the received input, determining (304) predicted input gestures as the current context gestures that start with a segment having the shape of the input movement, providing (305) a graphical icon for each current context gesture, the graphical icon indicating the shape of the gesture whereas the gesture is associated with at least one action related to the user interface, displaying (306) the graphical icons (411) and descriptors (412) for the predicted context gestures on the screen.

## Description

The present invention relates to gesture-based user interfaces for devices outputting a graphical user interface by means of an internal or an external display screen.

Gesture-based user interfaces become more and more popular for navigating various types of devices. In contrast to standard controls, such as a keyboard, a navigation pad or a joystick, gesture-based user interfaces provide much wider flexibility, including the possibility to define unlimited number of gestures that can be input by the user. However, the user, in particular a beginner in using a particular device, is usually able to learn only a small number of gestures and can be unaware of the other gestures that are available. Moreover, sophisticated applications handled by the device may require different gestures to be performed depending on the current context of the application, which further complicates the user interface.

Prior art graphical user interfaces (GUI) most frequently allow a user to define gestures and assign the defined gestures to selected events in the graphical user interface software. By means of such arrangement the user learns and remembers the defined gestures. However, this requires time, some expertise and good memory as there may be dozens of gestures per GUI. Hence the prior art systems are complex and not intuitive, especially when a situation is considered where there are multiple users of the prior art system.

Moreover, when an inexperienced user starts to use a gesture-based interface, the user needs to spend considerable amount of time to learn the specific way of inputting the gestures. In addition to the vast amount of gestures that can be input via the interface, this may result in a relatively long time necessary for the user to learn the interface. Moreover, in the initial period some commands may be input inaccurately, resulting in unintentional activation of unnecessary commands.

It would be therefore desirable to improve a gesture-based user interface to make it easier to use by the user and to improve the speed of learning to use the interface.

The object of the invention is a method for handling a gesture-based user interface for a device with a screen, comprising the steps of: receiving an input via a gesture-based input interface, determining a set of current context gestures that are acceptable in a current context of operation of the device and descriptors of the gestures, each gesture comprising at least two segments corresponding to the type of inputs that can be received via the gesture-based input interface, determining the segment type corresponding to the received input, determining predicted input gestures as the current context gestures that start with a segment having the shape of the input movement, providing a graphical icon for each current context gesture, the graphical icon indicating the shape of the gesture whereas the gesture is associated with at least one action related to the user interface, displaying the graphical icons and descriptors for the predicted context gestures on the screen.

Preferably, the method further comprises the step of receiving further input via the gesture-based input interface, determining the segment type corresponding to the received input and determining predicted input gestures as the previously determined input gestures than continue with a segment having the shape of the input movement.

Preferably, the delay between receiving the first input and receiving the further input is close to zero.

Preferably, a non-zero delay is allowed between receiving the first input and receiving the further input.

Preferably, the method further comprises the steps of displaying the graphical icons and descriptors for the currently active context gestures on the screen and highlighting the graphical icons for the predicted input gestures.

Preferably, the set of current content gestures is determined by enquiring the operating system and software applications about currently handled inputs.

Preferably, the graphical icons have a transparent background and are displayed as an overlay on the current contents of the screen.

Preferably, the method is activated upon receiving an input gesture which does not correspond to any of the current context gestures.

Preferably, the gestures are predefined in a database comprising information on a gesture identifier, gesture segments and gesture icon.

Preferably, the database further comprises application-specific gestures input to the database upon execution of a software application and deleted from the database upon stopping of the application.

Another object of the invention is a device having a gesture input interface and a display controller, the device comprising computer-implemented means for executing the method according to the invention.

Another object of the invention is a computer program comprising program code means for performing all the steps of the method according to the invention when said program is run on a computer, as well as a computer readable medium storing computer-executable instructions performing all the steps of the method according the invention when executed on a computer.

The object of the invention is shown by means of exemplary embodiment on a drawing, in which:
Fig. 1 shows schematically a structure of a device utilizing the gesture-based user interface,
Fig. 2 shows schematically the contents of a gestures database,
Fig. 3 shows the steps of a method for assisting the user in navigating the gesture-based user interface,
Figs. 4A-4C show an exemplary flow of screens with predicted gestures while inputting the gesture.

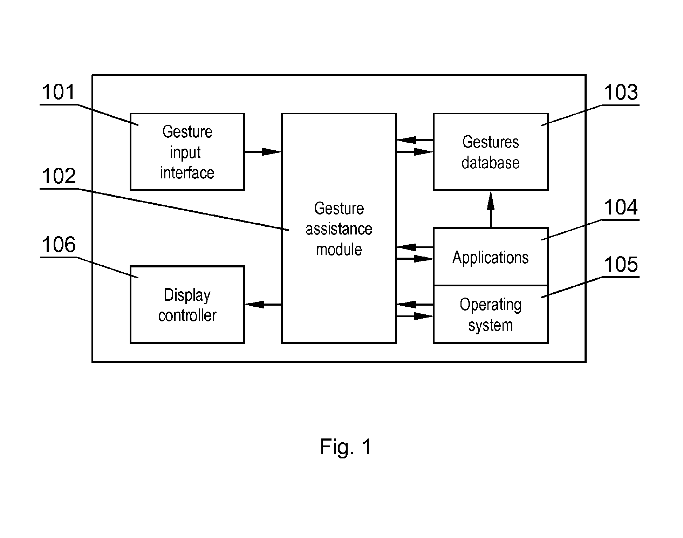

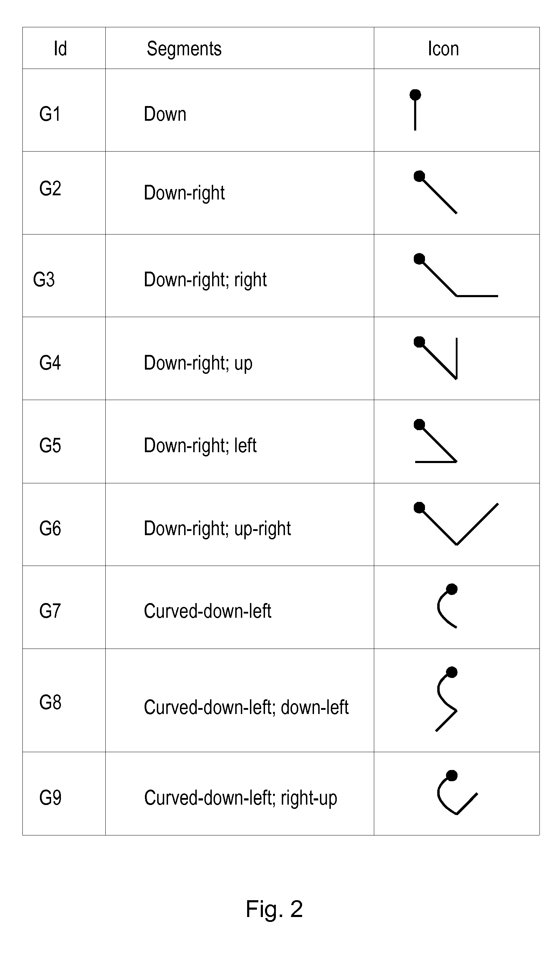

Fig. 1 shows schematically a structure of a device 100 utilizing the gesture-based user interface. The device comprises a gesture input interface 101 configured to receive gestures from the user and to detect the shapes of the gestures. The gesture input interface 101 may receive gestures from different devices such as a touch screen, a mouse, a remote control unit or the like. A gesture assistance module 102 is configured to operate the method according to the invention, i.e. to provide the user with assistance on the gestures available in the present context of the device. The gesture assistance module 102 uses a gestures database 103, described in details with reference to Fig. 2. The gestures database 103 will typically be stored in a non-volatile memory accessible to the gesture assistance module 102.

The operation of the device 100 is controlled by an operating system 104 and various applications 105. The device has a screen 106 on which graphical information can be presented.

Fig. 2 shows schematically exemplary contents of a portion of a gestures database 103 for a television receiver. Each gesture comprises an identifier, a list of segments constituting the gesture and a graphical icon representing the gesture. In another embodiment a change of direction in the description provided by segments parameter may also include definition of an angle such as down-left-280 - 300.

Additionally the gestures database 103 comprises references to actions associated with the gestures.

The graphical icon may be pre-generated and stored in the database or generated on demand based on the list of segments. The database 103 may comprise pre-generated gestures defined by the operating system 104 and may be supplemented by additional gestures from applications 105 operated by the operating system 104. Upon starting the application 105, the application may supplement the database 103 with a set of gestures unique for the particular application and after the application is closed, the unique set of gestures may be removed from the database.

The list of segments is an ordered list of items describing the movements to be performed by the user to correspond to a given gesture. The items may define straight-line vectors, curved vectors or other shapes, such as circles, waves, two-handed gestures etc, as known in the art.

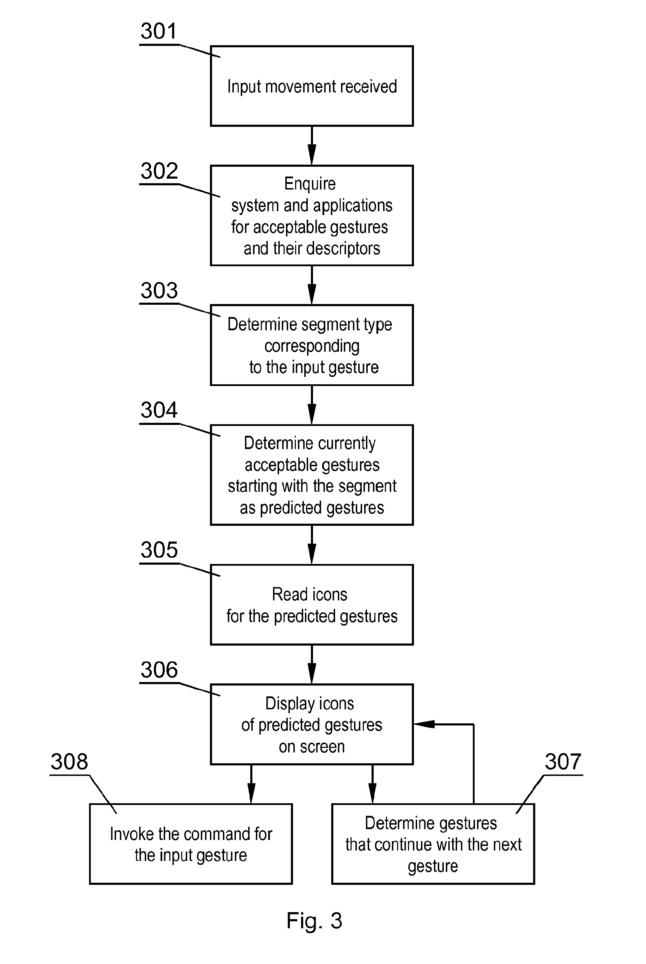

The gestures database 103 may comprise dozens of gestures, which can be problematic for the user to learn. Therefore, it would be desirable to provide the user with a hint of which gestures can be used in the present context of the operation of the device. The hint is provided by the gesture assistance module 102 operating the method shown in Fig. 3.

The gesture assistance module may be activated manually by the user by performing a specific gesture or pressing a key of a standard controller. Furthermore, the assistance may be invoked upon detecting one or more gestures that are unrecognizable or detecting a gesture that is not handled in the current context. The assistance may be also activated upon each change of context that results in a change of set of handled gestures.

The gesture assistance module 102 is activated in step 301 upon receiving an input via the gesture input interface 101. In step 302 the gesture assistance module 102 enquires the operating system 104 and applications 105 for a list of gestures that are acceptable in the current context and descriptors of that gestures. The operating system 104 typically returns a list of standard, i.e. predefined, gesture identifiers. The applications may return a list of standard gesture identifiers and application-specific identifiers which are input to the database 103 upon starting the application. The descriptors of the gestures are content-specific. For example, the gestures shown in Fig. 2 may have the following context:
G1 - menu (handled by operating system, activation of main menu)
G2 - live tv (handled by operating system, activation of TV tuner)
G3 - premieres (handled by operating system, activation of VOD application)
G4 - featured (handled by operating system, activation of program reviews application)
G5 - grid (handled by operating system, activation of EPG application)
G6 - bookings (handled by operating system, activation of PVR application)
G7 - search (handled by currently active Internet browser application, activating search feature)
G8 - recent (handled by currently active Internet browser application, activating last viewed page)
G9 - keyword (handled by currently active Internet browser application, activating keyword search assistance function)

The descriptors may have a form of a simple text string (such as "menu", "live tv", "premieres" etc.) or a set of text strings presenting basic information (such as "menu", "live tv", "premieres" etc.) and extended information (such as "activation of main menu", "activation of TV tuner" etc.). Alternatively, the descriptors may have a form of graphic file.

In step 303 the type of segment corresponding to the input gesture is determined, such as down, up, left, right, down-left, down-right, curved down left, etc. Next, in step 304 the currently acceptable gestures that start with the determined segment are determined as predicted gestures. In step 305 the icons are read for the predicted gestures. The icons are then displayed in step 305 on the display screen together with the gesture descriptors. The segments of the gestures that have been input via the user interface may be highlighted. Next it is assessed whether the user input is continued. If the user inputs a following segment, the segment type and gestures that continue with this segment are determined in step 307 and the procedure returns to step 306 to display the icons associated with that segment. If no further input is detected, then it is assumed that the user has finished inputting the gesture and the procedure invokes the command associated with the selected gesture in step 308.

When assessing whether the user input is continued before execution of step 307, the delay time between the segments of the input gesture may be set to a value close to zero, i.e. the system may be configured to receive gestures constituting relatively continuous movement, wherein the change of movement direction indicates beginning of a new segment of the gesture. Alternatively, a delay between separate segments may be allowed when executing step 307, in order to allow the user to divide the full gesture into segments distinct in the time domain. In such a case the user may input the first segment of the gesture and observe which gestures are associated with this segment, then to see what are the movements associated with the particular command and perform the following segment of the gesture. In cuh a case, step 308, i..e execution of the input gesture may be performed after a special input is invoked (such as shaking a remote controller, pressing a key, pushing the hand towards the screen etc) or after a predetermined delay such as 1 second.

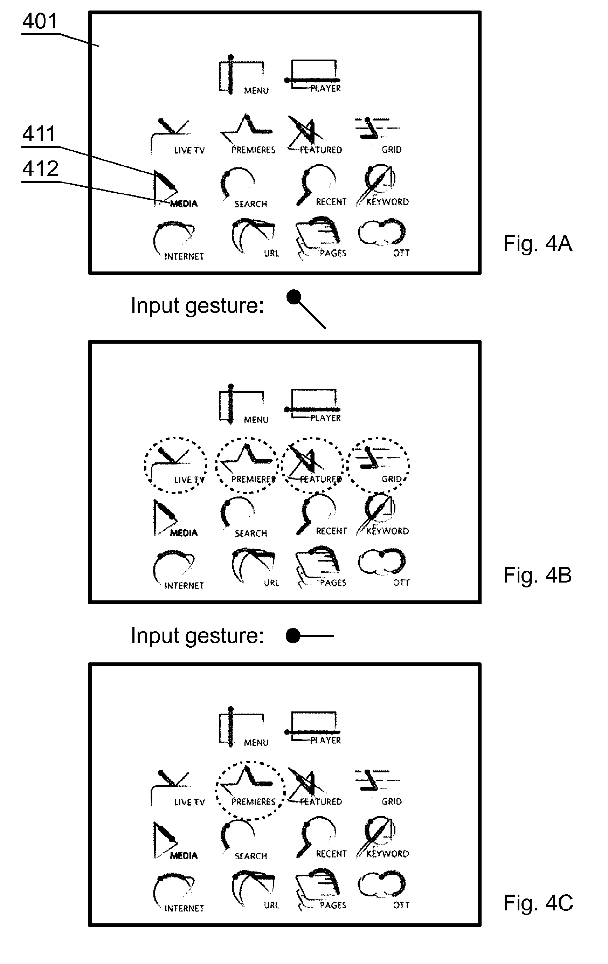

When displaying the icons in step 306, only the icons that are related to the determined gestures may be displayed, or all icons may be displayed and the icons that are related to the determined gestures may be specially highlighted. An exemplary flow of actions is presented in Figs. 4A-4C. First, as shown in Fig. 4A, a set of a variety of icons 411 with descriptors 412 is displayed that are acceptable in the current context. Preferably, the icons are displayed as an overlay on the current screen contents 401. Next, after receiving user gesture, the icons that have a starting segment corresponding to that gesture are highlighted (by changing their colour, by adding a highlighting colour, or by adding a contour or another distinguishing element next to the icon). In the example of Fig. 4B, the icons that start with a down-right segment are highlighted. Next, after receiving the following input, the icon or icons that have the following segment corresponding to that input shape are highlighted. If no further input is received, the action related to the icon corresponding to a gesture consisting of the input segments is invoked.

By presenting the gestures available in the present context in a form of icons on the display, the user is made aware of the functionality offered in the present context and it is easier for the user to learn to use of the device in an efficient manner. Moreover, the user receives real-time visual response to the performed actions and may control whether the gesture is correctly input.

It can be easily recognized, by one skilled in the art, that the aforementioned method for handling the gesture-based user interface may be performed and/or controlled by one or more computer programs. Such computer programs are typically executed by utilizing the computing resources of the device. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for handling a gesture-based user interface for a device with a screen, comprising the steps of:
- receiving (301) an input via a gesture-based input interface,
- determining (302) a set of current context gestures that are acceptable in a current context of operation of the device and descriptors of the gestures, each gesture comprising at least two segments corresponding to the type of inputs that can be received via the gesture-based input interface (101),
- determining (303) the segment type corresponding to the received input,
- determining (304) predicted input gestures as the current context gestures that start with a segment having the shape of the input movement,
- providing (305) a graphical icon for each current context gesture, the graphical icon indicating the shape of the gesture whereas the gesture is associated with at least one action related to the user interface,
- displaying (306) the graphical icons (411) and descriptors (412) for the predicted context gestures on the screen.

2. The method according to claim 1, further comprising the step of receiving (307) further input via the gesture-based input interface, determining the segment type corresponding to the received input and determining predicted input gestures as the previously determined input gestures than continue with a segment having the shape of the input movement.

3. The method according to claim 1, wherein the delay between receiving (301) the first input and receiving (307) the further input is close to zero.

4. The method according to claim 1, wherein a non-zero delay is allowed between receiving (301) the first input and receiving (307) the further input.

5. The method according to claim 1, further comprising the steps of displaying the graphical icons (411) and descriptors (412) for the currently active context gestures on the screen and highlighting the graphical icons for the predicted input gestures.

6. The method according to claim 1, **characterized by** determining (303) the set of current content gestures by enquiring the operating system (104) and software applications (105) about currently handled inputs.

7. The method according to claim 1, wherein the graphical icons (411) have a transparent background and are displayed as an overlay on the current contents (401) of the screen.

8. The method according to claim 1, **characterized by** being activated upon receiving an input gesture which does not correspond to any of the current context gestures.

9. The method according to claim 1, wherein the gestures are predefined in a database comprising information on a gesture identifier, gesture segments and gesture icon.

10. The method according to claim 9, wherein the database further comprises application-specific gestures input to the database upon execution of a software application and deleted from the database upon stopping of the application.

11. A device (100) having a gesture input interface (101) and a display controller (106), **characterized in that** it comprises computer-implemented means for executing the method according to any of claims 1-10.

12. A computer program comprising program code means for performing all the steps of the method according to any of claims 1-10 when said program is run on a computer.

13. A computer readable medium storing computer-executable instructions performing all the steps of the method according to any of claims 1-10 when executed on a computer.
